# EUROPÄISCHE PATENTSCHRIFT

(11) **EP 3 512 760 B1**
(45) Veröffentlichungstag und Bekanntmachung des Hinweises auf die Patenterteilung: **03.03.2021**
(21) Anmeldenummer: 17745983.1
(22) Anmeldetag: 21.07.2017
(51) Int. Cl.: B62D 35/00, B62D 37/02

(54) **LUFTWIDERSTANDSREDUZIERENDE VORRICHTUNG FÜR EIN FAHRZEUG**
AIR RESISTANCE-REDUCING DEVICE FOR A VEHICLE
DISPOSITIF PERMETTANT DE RÉDUIRE LA RÉSISTANCE À L'AIR D'UN VÉHICULE

(30) Priorität: 15.09.2016 DE 102016011094
(43) Veröffentlichungstag der Anmeldung: 24.07.2019
(73) Patentinhaber: WABCO Europe BVBA, 1170 Brussels (BE)
(72) Erfinder: GENCASLAN, Umut, 30451 Hannover (DE); VAN RAEMDONCK, Gandert Marcel Rita, 2611 PW Delf (NL)
(74) Vertreter: Copi, Joachim
(86) Internationale Anmeldenummer: PCT/EP2017/000891
(87) Internationale Veröffentlichungsnummer: WO 2018/050266

(56) Entgegenhaltungen:
- WO-A1-2014/011886
- WO-A1-2014/121937
- US-A1- 2010 106 380
- US-B1- 6 666 498

## Beschreibung

Gemäß dem Oberbegriff des Anspruchs 1 betrifft die Erfindung eine luftwiderstandsreduzierende Vorrichtung für ein Fahrzeug. Die luftwiderstandsreduzierende Vorrichtung weist mindestens ein erstes Luftleitelement A (3) und mindestens ein zweites Luftleitelement B (4) auf, die zwischen einer Ruhestellung und einer Fahrstellung zur Konturverlängerung und aerodynamischer Luftleitung verstellbar sind. Weiterhin weist die luftwiderstandsreduzierende Vorrichtung einen Aktuator (6) auf, der das erste Luftleitelement A (3) und das zweite Luftleitelement B (4) zwischen einer Ruhestellung und einer Fahrstellung verstellt.

Luftwiderstandsreduzierende Vorrichtungen für Fahrzeuge sind hinlänglich bekannt. So zeigt die DE 20 2009 014 476 U1 eine Heckspoilereinrichtung mit einer schwenkbaren Unterstützungsstruktur. Dabei wird der Umstromkörper bzw. das Luftleitelement derart weit weg bewegt, dass eine Behinderung beim Öffnen der Tür, am hinteren Ende des Fahrzeuges vermieden werden kann.

Aus der DE 102 28 658 A1 sind Heckspoiler bekannt, bei denen über ein Scharnier schwenkbare Planflächen im Fahrbereich eine aerodynamische Optimierung ermöglichen sollen.

Auch die US 7,976,096 B2 zeigt eine Vorrichtung zur Reduktion des Luftwiderstandes bei Fahrzeugen. Dabei ist der Heckspoiler an den Hintertüren des Fahrzeuges mittels Scharnieren und Federelementen befestigt. Das Öffnen und Schließen der Luftleitflächen des Heckspoilers erfolgt mechanisch.

Derartige luftwiderstandsreduzierende Vorrichtungen mit Anbindungen im Scharnierbereich sind im Allgemeinen sehr aufwendig, da nur spezielle Scharniervorrichtungen bzw. Scharnierausbildungen zur Anwendung kommen.

Weiterhin ist eine Heckspoilereinrichtung mit einer Vier-Gelenk-Kopplung zur Verstellung des Luftleitelements zwischen einer Grundstellung und der Fahrstellung aus der DE 10 2013 011 169 A1 bekannt.

Zudem zeigt die US 9,145,177 B2, bzw. die WO2014011886,- von der die Erfindung ausgeht,- eine automatische Heckspoilereinrichtung, welche mittels eines Geschwindigkeitssignals aktiviert wird. Derartige luftwiderstandsreduzierende Vorrichtungen sind gewöhnlich kostenintensiv und wartungsaufwendig. Aufgrund von Gewichts- und Kostenreduktionsforderungen in der Automobilbranche sind zunehmend neue Konzepte gewünscht, die den Einsatz bekannter Prinzipien, wie der Einsatz von mindestens zwei Aktuatoren zum Verstellen der seitlich und oberhalb des Fahrzeughecks angebrachten Luftleitelemente ablösen sollen.

Aufgabe der Erfindung ist es, eine geeignete Vorrichtung zur Luftwiderstandsreduzierung für Fahrzeuge bereitzustellen, die aufwändige Konstruktionen von mindestens zwei Aktuatoren zum Verstellen von mindestens zwei unabhängigen Luftleitelementen ablösen soll.

Die Aufgabe wird erfindungsgemäß durch die kennzeichnenden Merkmale des Anspruchs 1 gelöst. Somit verstellt ein Aktuator ein erstes Luftleitelement A und mindestens ein zweites Luftleitelement B zwischen einer Ruhestellung und einer Fahrstellung.

Der erzielte Vorteil ist insbesondere darin zu sehen, dass eine Stützeinrichtung nur ein Antriebselement in Form eines Aktuators aufweist, wodurch Kosten- und Wartungsaufwand minimiert werden. Der Aktuator kann an beliebiger Position, z.B. an einer Heckfläche eines Fahrzeuges angebracht werden, wobei der Aktuator über mindestens ein Verbindungselement mindestens zwei, nur über das Verbindungselement verbundene Luftleitelemente verstellt. In besonders vorteilhafter Ausgestaltung verstellt der Aktuator über ein Verbindungselement ein erstes Luftleitelement A und ein zweites Luftleitelement B, die nur über das eine Verbindungselement miteinander verbunden sind.

Das mindestens eine Verbindungselement weist bevorzugt mindestens ein Kopplungselement auf, welches den Aktuator mit dem mindestens einen Verbindungselement verbindet. Kopplungselemente können z.B. Gelenkverbindungen, Schraubverbindungen, Rastverbindungen oder Steckverbindungen sein, wobei der Aktuator mit dem mindestens einen Verbindungselement wirkverbunden ist.

Zudem weist das mindestens eine Verbindungselement mindestens einen ersten Schenkel auf, der das mindestens eine Kopplungselement mit dem ersten Luftleitelement A verbindet. Mindestens ein zweiter Schenkel des mindestens einen Verbindungselements verbindet das mindestens eine Kopplungselement mit dem mindestens zweiten Luftleitelement B. Der erste und der mindestens zweite Schenkel des mindestens einen Verbindungselements übertragen beispielsweise Druckund Zugkräfte des Aktuators, wodurch das erste und das mindestens zweite Luftleitelement A und B der luftwiderstandsreduzierenden Vorrichtung zwischen einer Ruhestellung und einer Fahrstellung verstellbar ist.

Mindestens ein dritter Schenkel des mindestens einen Verbindungselements, verbindet den ersten Schenkel des mindestens einen Verbindungselements mit mindestens dem zweiten Schenkel des mindestens einen Verbindungselements. Sowohl der erste und mindestens der zweite Schenkel des mindestens einen Verbindungselements, als auch der mindestens dritte Schenkel des mindestens einen Verbindungselements können z.B. als stabförmige Metall- und/oder Kunststoffprofile und/oder Federelemente und/oder Drahtelemente, aber auch als stabförmige Metall- und/oder Kunststoffprofile mit mindestens einem Rastelement ausgebildet sein.

Ein weiterer Vorteil ist, dass das erste Luftleitelement A und das mindestens zweite Luftleitelement B nur über das eine Verbindungselement verbunden sind und eine Montage der luftwiderstandsreduzierenden Vorrichtung vereinfacht.

In einer weiteren vorteilhaften Ausgestaltung bilden der Aktuator und das mindestens eine Verbindungselement der luftwiderstandsreduzierenden Vorrichtung eine Stützeinrichtung zum Abstützen des ersten Luftleitelements A und des mindestens zweiten Luftleitelements B während einer Fahrstellung.

Zudem erweist sich als Vorteil, dass der Aktuator an einer wesentlich ebenen Fläche eines Fahrzeuges über eine Gelenkverbindung angeordnet ist und der Aktuator je nach Ruhestellung oder Fahrstellung ausgelenkbar ist.

In einer weiteren bevorzugten Ausführungsform ist der Aktuator der Stützeinrichtung der luftwiderstandsreduzierenden Vorrichtung als Linearaktuator ausgebildet. Linearaktuatoren weisen den Vorteil auf, dass sie eine direkte translatorische, daher eine geradlinige Bewegung erzeugen. Bei Elektromotoren hingegen werden mittels Getriebe die rotatorischen Bewegungen in translatorische Bewegungen umgesetzt.

Damit weisen die Linearaktuatoren weniger reibende Teile auf und sind dadurch wartungsfreundlicher als Elektromotoren.

Auch denkbar ist der Einsatz eines pneumatischen Aktuators oder eines elektronischen Aktuators für eine Stützeinrichtung der luftwiderstandsreduzierenden Vorrichtung.

Die luftwiderstandsreduzierende Vorrichtung weist den Vorteil auf, dass sie an einer Vielzahl an Stellen eines Fahrzeuges angebracht werden kann, sofern eine wesentlich ebene Fläche am Fahrzeug gegeben ist. So kann die luftwiderstandsreduzierende Vorrichtung z.B. an einer Heckfläche einer: Fahrerhauskabine, eines Lastkraftwagens, eines Sattelanhängers oder eines Anhängers angeordnet sein. Auch denkbar ist eine Anordnung als Dachspoiler auf einer Fahrerkabine oder eine Anordnung der luftwiderstandsreduzierenden Vorrichtung an Seitenflächen z.B.: eines Anhängers, eines Sattelanhängers, eines Lastkraftwagens oder eines Personenkraftwagens.

Die Aktivierung der luftwiderstandsreduzierenden Vorrichtung lässt sich dadurch erreichen, dass die luftwiderstandsreduzierende Vorrichtung vorzugsweise geschwindigkeitsabhängig vom Fahrzeug oder auf Wunsch des Fahrers zwischen einer Ruhestellung und einer Fahrstellung verstellbar ist. Die Geschwindigkeit des Fahrzeuges kann mittels Drehzahlsensoren am Fahrzeug bestimmt werden, wobei zusätzlich Geschwindigkeitsschwellen definiert sein können, bei denen die luftwiderstandsreduzierende Vorrichtung mittels der Stützeinrichtung der luftwiderstandsreduzierende Vorrichtung eine Ruhestellung oder eine Fahrstellung einnimmt. Zudem kann vorteilhaft der Fahrer des Fahrzeuges die luftwiderstandsreduzierende Vorrichtung mittels einer Betätigungseinrichtung am Fahrzeug, bevorzugt im Führerhaus des Fahrzeuges zwischen einer Ruhestellung oder einer Fahrstellung einstellen. Denkbar ist auch eine vorausschauende Einstellung der luftwiderstandsreduzierenden Vorrichtung über ein Globales Positionsbestimmungssystem, auch bekannt als GPS-System. Je nach Geschwindigkeit, Verkehr, Fahrbahn oder Höhenprofil bzw. in Kombination kann so eine effektive und Kraftstoffsparende Verstellung der luftwiderstandsreduzierenden Vorrichtung erfolgen.

In einer weiteren vorteilhaften Weiterbildung ist das erste Luftleitelement A der luftwiderstandsreduzierenden Vorrichtung vertikal, insbesondere am linken oder rechten Seitenrand der wesentlich ebenen Fläche eines Fahrzeuges und das zweite Luftleitelement B der luftwiderstandsreduzierenden Vorrichtung horizontal, insbesondere am Dachrand oder am unteren in Richtung Fahrbahnfläche weisenden Rand der wesentlich ebenen Fläche eines Fahrzeuges angeordnet. Das erste Luftleitelement A und das zweite Luftleitelemente B sind in Fahrstellung, in Bezug zur Seitenfläche bzw. Dachfläche des Fahrzeuges angewinkelt. Die Stützeinrichtung ist vorteilhaft an der wesentlich ebenen Fläche eines Fahrzeuges, im Bereich der strömungsabgewandten Seite, daher im so genannten "Totwasser des Fahrzeuges, des ersten und zweiten Luftleitelements A und B angeordnet.

In einer weiteren vorteilhaften Ausgestaltung ist das erste Luftleitelement A und das zweite Luftleitelement B über ausschließlich einen Aktuator von einer Ruheposition in eine Fahrposition und von einer Fahrposition in eine Ruheposition verstellbar.

Der Aktuator ersetzt damit den aus dem Stand der Technik bekannten Rückholvorgang des ersten Luftleitelements A und des zweiten Luftleitelements von einer Fahrstellung in eine Ruhestellung mittels einer weiteren Rückholvorrichtung, wodurch eine vorteilhafte Reduzierung der Teileanzahl und der damit verbundenen Kostenreduzierung erreicht wird.

In einer weiteren vorteilhaften Ausgestaltung weisen das erste Luftleitelement A und das zweite Luftleitelement B keine direkte Verbindung auf. Die Luftleitelemente A und B sind ausschließlich über das Verbindungselement miteinander verbunden.

Die nachstehende Figur veranschaulicht ein besonders für eine Heckfläche eines Fahrzeuges geeignetes Ausführungsbeispiel der Erfindung in einer schematischen Heckansicht.

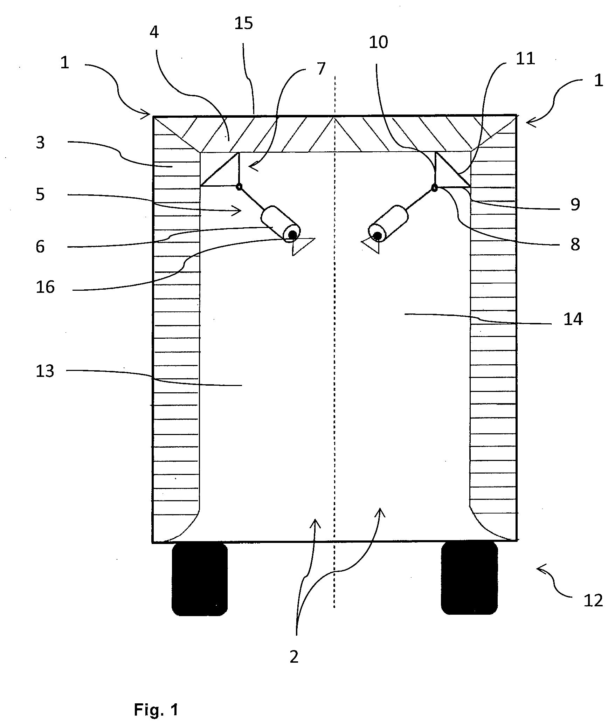

Fig. 1 zeigt eine Heckansicht eines Fahrzeuges 12, insbesondere eines Nutzfahrzeuges 12 mit einem Dach 15, einer im Wesentlichen ebenen Fläche 2, die in dem Ausführungsbeispiel eine in Fahrtrichtung linke Hecktür 13 und eine in Fahrtrichtung rechte Hecktür 14 darstellt. An der linken Hecktür 13 und an der rechten Hecktür 14 ist je eine luftwiderstandsreduzierende Vorrichtung 1 angeordnet. Da die luftwiderstandsreduzierende Vorrichtung 1 sowohl an der linken, als auch an der rechten Hecktür 13; 14 des Nutzfahrzeuges 12 angeordnet ist, wird deshalb im Folgenden beispielhaft die luftwiderstandsreduzierende Vorrichtung 1 für die linke Hecktür 13 beschrieben.

Die luftwiderstandsreduzierende Vorrichtung 1 weist ein erstes Luftleitelement A 3 auf, welches seitlich vertikal an der linken Hecktür 13 angeordnet ist. Ein zweites Luftleitelement B 4 ist horizontal am Dach 15 des Nutzfahrzeuges 12 angeordnet. Das erste und das zweite Luftleitelement A und B 3; 4 sind nur über das Verbindungselement 7 verbunden und können von einer eingeklappten Ruhestellung in eine ausgeklappte Fahrstellung verstellt werden. Dabei verlaufen die Bewegungsbahnen des ersten und des zweiten Luftleitelements A und B 3; 4 orthogonal zueinander. Die Verstellung der beiden unabhängigen Luftleitelemente A und B 3; 4 erfolgt mittels einer Stützeinrichtung 5, welche aus einem Aktuator 6 und einem Verbindungselement 7 zusammengesetzt ist. Der Aktuator ist beweglich über eine Gelenkverbindung 16 angeordnet, wodurch der Aktuator je nach Soll-Stellung der luftwiderstandsreduzierenden Vorrichtung 1 ausgelenkt wird.

Die Verstellung der Luftwiederstand reduzierenden Vorrichtung 1 zwischen einer Ruhestellung und einer Fahrstellung erfolgt zum einen über ein GPS-System. Dabei werden je nach Fahrzeug und/oder Fahrgeschwindigkeit und/oder Höhenprofil und/oder Wetter Das erste und das zweite Luftleitelement A und B 3; 4 der luftreduzierenden Vorrichtung 1 in eine aerodynamisch geeignete Stellung verstellt. Darüber hinaus kann die luftreduzierende Vorrichtung 1 auf Wunsch des Fahrers verstellt werden. Dazu ist im Fahrerhaus eine Betätigungseinrichtung in Form eines Drucktasters, auch "push-button" genannt angeordnet. Je nach Stellung des Drucktasters, befinden sich die unabhängigen Luftleitelemente A und B 3; 4 in einer Stellung zwischen einer Ruhestellung oder einer Fahrstellung. Darüber hinaus erfolgt die Verstellung der Luftwiederstand reduzierenden Vorrichtung 1 zwischen einer Ruhestellung und einer Fahrstellung über einen im Fahrzeug angebrachten Drehzahlsensor.

### Bezugszeichenliste (Teil der Beschreibung)

- 1: Luftwiderstandsreduzierende Vorrichtung
- 2: im wesentlichen ebene Fläche
- 3: erstes unabhängiges Luftleitelement A
- 4: zweites unabhängiges Luftleitelement B
- 5: Stützeinrichtung
- 6: Aktuator
- 7: Verbindungselement
- 8: Kopplungselement
- 9: erster Schenkel
- 10: zweiter Schenkel
- 11: dritter Schenkel
- 12: Fahrzeug
- 13: linke Hecktür
- 14: rechte Hecktür
- 15: Dach
- 16: Gelenkverbindung

## Patentansprüche

1. Luftwiderstandsreduzierende Vorrichtung (1) für ein Fahrzeug (12), wobei die luftwiderstandsreduzierende Vorrichtung (1) mindestens aufweist: ein erstes Luftleitelement A (3) und ein zweites Luftleitelement B (4), die zwischen einer Ruhestellung und einer Fahrstellung zur Konturverlängerung und aerodynamischer Luftleitung verstellbar sind, wobei das erste Luftleitelement A (3) und das zweite Luftleitelement B (4) zwischen der Ruhestellung und der Fahrstellung mit Hilfe eines Aktuators (6) verstellbar sind ,**dadurch gekennzeichnet, dass** mindestens ein Verbindungselement (7) der luftwiderstandsreduzierende Vorrichtung (1) mindestens aufweist: ein Kopplungselement (8), welches den Aktuator (6) mit dem mindestens einen Verbindungselement (7) verbindet, einen ersten Schenkel (9), der das Kopplungselement (8) mit dem ersten Luftleitelement A (3) verbindet, einen zweiten Schenkel (10), der das Kopplungselement (8) mit dem zweiten Luftleitelement B (4) verbindet, sowie einen dritten Schenkel (11), der den ersten Schenkel (9) mit dem zweiten Schenkel (10) verbindet.

2. Luftwiderstandsreduzierende Vorrichtung (1) nach Anspruch 1, **dadurch gekennzeichnet, dass** das erste Luftleitelement A (3) und das zweite Luftleitelement B (4) nur über das eine Verbindungselement (7) verbunden sind.

3. Luftwiderstandsreduzierende Vorrichtung (1) nach Anspruch 2, **dadurch gekennzeichnet, dass** der Aktuator (6) und das mindestens eine Verbindungselement (7) eine Stützeinrichtung (9) bilden.

4. Luftwiderstandsreduzierende Vorrichtung (1) nach einen der vorangegangenen Ansprüche, **dadurch gekennzeichnet, dass** der Aktuator (6) an einer wesentlich ebenen Fläche (2) eines Fahrzeuges (12), über eine Gelenkverbindung (16) angeordnet ist.

5. Luftwiderstandsreduzierende Vorrichtung (1) nach Anspruch 3, **dadurch gekennzeichnet, dass** der Aktuator (6) der Stützeinrichtung (9) ein Linear-Aktuator, ein pneumatischer Aktuator oder ein elektronischer Aktuator ist.

6. Luftwiderstandsreduzierende Vorrichtung (1) nach einen der vorangegangenen Ansprüche, **dadurch gekennzeichnet, dass** die luftwiderstandsreduzierende Vorrichtung (1) z.B. an der Heckfläche (2) einer:
Fahrerhauskabine, eines Lastkraftwagens, eines Sattelanhängers oder eines Anhängers angeordnet ist.

7. Luftwiderstandsreduzierende Vorrichtung (1) nach einen der vorangegangenen Ansprüche, **dadurch gekennzeichnet, dass** die luftwiderstandsreduzierende Vorrichtung (1) geschwindigkeitsabhängig vom Fahrzeug (2) mittels mindestens einem Drehzahlsensor und/oder auf Wunsch des Fahrers und/oder mittels einer Globalen- Positionsbestimmungseinrichtung zwischen einer Ruhestellung und einer Fahrstellung verstellbar ist.

8. Luftwiderstandsreduzierende Vorrichtung (1) nach einen der vorangegangenen Ansprüche, **dadurch gekennzeichnet, dass** das erste Luftleitelement A (3) vertikal an der wesentlich ebenen Fläche (2) eines Fahrzeuges (12) und das zweite Luftleitelement B (4) horizontal an der wesentlich ebenen Fläche (2) eines Fahrzeuges (12) angeordnet ist.

9. Luftwiderstandsreduzierende Vorrichtung (1) nach Anspruch 1, **dadurch gekennzeichnet, dass** das erste Luftleitelement A (3) und das zweite Luftleitelement B (4) über den Aktuator (6) von einer Ruheposition in eine Fahrposition und von einer Fahrposition in eine Ruheposition verstellbar sind.

10. Luftwiderstandsreduzierende Vorrichtung (1) nach einen der vorangegangenen Ansprüche, **dadurch gekennzeichnet, dass** das erste Luftleitelement A (3) und das zweite Luftleitelement B (4) keine direkte Verbindung aufweisen.

## Claims

1. Air resistance-reducing device (1) for a vehicle (12), wherein the air resistance-reducing device (1) comprises at least: a first air guide element A (3) and a second air guide element B (4) which can be adjusted between a rest position and a travel position for contour extension and aerodynamic air guidance, wherein the first air guide element A (3) and the second air guide element B (4) can be adjusted between the rest position and the travel position by means of an actuator (6), **characterized in that** at least one connecting element (7) of the air resistance-reducing device (1) comprises at least: a coupling element (8) which connects the actuator (6) to the at least one connecting element (7), a first leg (9) which connects the coupling element (8) to the first air guide element A (3), a second leg (10) which connects the coupling element (8) to the second air guide element B (4), and a third leg (11) which connects the first leg (9) to the second leg (10).

2. Air resistance-reducing device (1) according to Claim 1, **characterized in that** the first air guide element A (3) and the second air guide element B (4) are connected only via the connecting element (7).

3. Air resistance-reducing device (1) according to Claim 2, **characterized in that** the actuator (6) and the at least one connecting element (7) form a supporting device (9).

4. Air resistance-reducing device (1) according to any of the preceding claims, **characterized in that** the actuator (6) is arranged on a substantially flat surface (2) of a vehicle (12) via a hinge connection (16).

5. Air resistance-reducing device (1) according to Claim 3, **characterized in that** the actuator (6) of the support device (9) is a linear actuator, a pneumatic actuator or an electronic actuator.

6. Air resistance-reducing device (1) according to any of the preceding claims, **characterized in that** the air resistance-reducing device (1) is arranged for example on the rear face (2) of a: driver's cab, a truck, a semitrailer or a trailer.

7. Air resistance-reducing device (1) according to any of the preceding claims, **characterized in that** the air resistance-reducing device (1) can be adjusted between a rest position and a travel position depending on the speed of the vehicle (2) by means of at least one rotation speed sensor and/or at the driver's request and or by means of a global position determination device.

8. Air resistance-reducing device (1) according to any of the preceding claims, **characterized in that** the first air guide element A (3) is arranged vertically on the substantially flat surface (2) of a vehicle (12), and the second air guide element B (4) is arranged horizontally on the substantially flat surface (2) of a vehicle (12).

9. Air resistance-reducing device (1) according to Claim 1, **characterized in that** the first air guide element A (3) and the second air guide element B (4) can be adjusted from a rest position into a travel position and from a travel position into a rest position via the actuator (6).

10. Air resistance-reducing device (1) according to any of the preceding claims, **characterized in that** the first air guide element A (3) and the second air guide element B (4) have no direct connection.

## Revendications

1. Dispositif de réduction de résistance à l'air (1) destiné à un véhicule (12), le dispositif de réduction de résistance à l'air (1) comportant au moins : un premier élément de guidage d'air A (3) et un deuxième élément de guidage d'air B (4), lesquels sont réglables entre une position de repos et une position de roulement en vue de l'allongement du contour et la conduction aérodynamique de l'air, le premier élément de guidage d'air A (3) et le deuxième élément de guidage d'air B (4) étant réglables entre la position de repos et la position de roulement à l'aide d'un actionneur (6), **caractérisé en ce qu'**au moins un élément de liaison (7) du dispositif de réduction de résistance à l'air (1) comporte au moins : un élément d'accouplement (8) qui relie l'actionneur (6) à au moins un élément de liaison (7), une première branche (9) qui relie l'élément d'accouplement (8) au premier élément de guidage d'air A (3), une deuxième branche (10) qui relie l'élément d'accouplement (8) au deuxième élément de guidage d'air B (4), et une troisième branche (11) qui relie la première branche (9) à la deuxième branche (10).

2. Dispositif de réduction de résistance à l'air (1) selon la revendication 1, **caractérisé en ce que** le premier élément de guidage d'air A (3) et le deuxième élément de guidage d'air B (4) ne sont reliés que par le biais du seul élément de liaison (7).

3. Dispositif de réduction de résistance à l'air (1) selon la revendication 2, **caractérisé en ce que** l'actionneur (6) et l'au moins un élément de liaison (7) forment un moyen de support (9).

4. Dispositif de réduction de résistance à l'air (1) selon l'une des revendications précédentes, **caractérisé en ce que** l'actionneur (6) est disposé sur une surface (2) sensiblement plane d'un véhicule (12) par le biais d'une liaison articulée (16).

5. Dispositif de réduction de résistance à l'air (1) selon la revendication 3, **caractérisé en ce que** l'actionneur (6) du moyen de support (9) est un actionneur linéaire, un actionneur pneumatique ou un actionneur électronique.

6. Dispositif de réduction de résistance à l'air (1) selon l'une des revendications précédentes, **caractérisé en ce que** le dispositif de réduction de résistance à l'air (1) est disposé par exemple sur la surface arrière (2) d'une cabine de conducteur, d'un camion, d'une semi-remorque ou d'une remorque.

7. Dispositif de réduction de résistance à l'air (1) selon l'une des revendications précédentes, **caractérisé en ce que** le dispositif de réduction de résistance à l'air (1) peut être réglé en fonction de la vitesse du véhicule (2) au moyen d'au moins un capteur de vitesse et/ou à la demande du conducteur et/ou à l'aide d'un moyen de détermination de position globale entre la position de repos et une position de roulement.

8. Dispositif de réduction de résistance à l'air (1) selon l'une des revendications précédentes, **caractérisé en ce que** le premier élément de guidage d'air A (3) est disposé verticalement sur la surface (2) sensiblement plane d'un véhicule (12) et le deuxième élément de guidage d'air B (4) est disposé horizontalement sur la surface (2) sensiblement plane d'un véhicule (12).

9. Dispositif de réduction de résistance à l'air (1) selon la revendication 1, **caractérisé en ce que** le premier élément de guidage d'air A (3) et le deuxième élément de guidage d'air B (4) peuvent être réglés par le biais de l'actionneur (6) d'une position de repos à une position de roulement et d'une position de roulement à une position de repos.

10. Dispositif de réduction de résistance à l'air (1) selon l'une des revendications précédentes, **caractérisé en ce que** le premier élément de guidage d'air A (3) et le deuxième élément de guidage d'air B (4) n'ont pas de liaison directe.
